# EUROPEAN PATENT APPLICATION

(11) **EP 2 624 346 A1**
(43) Date of publication of application: **07.08.2013**
(21) Application number: 11829198.8
(22) Date of filing: 28.09.2011
(51) Int. Cl.: H01M 8/04, H01M 8/12

(54) **FUEL CELL DEVICE**

(30) Priority: 30.09.2010 JP 2010220433
(71) Applicant: TOTO LTD., Kitakyushu-shi Fukuoka 802-8601 (JP)
(72) Inventor: OTSUKA Toshiharu, Kitakyushu-shi Fukuoka 802-8601 (JP); TSUCHIYA Katsuhisa, Kitakyushu-shi Fukuoka 802-8601 (JP); SHIGEZUMI Tsukasa, Kitakyushu-shi Fukuoka 802-8601 (JP); OOE Toshiharu, Kitakyushu-shi Fukuoka 802-8601 (JP); NAKANO Kiyotaka, Kitakyushu-shi Fukuoka 802-8601 (JP); MATSUO Takuya, Kitakyushu-shi Fukuoka 802-8601 (JP)
(74) Representative: Witte, Weller & Partner
(86) International application number: PCT/JP2011/072223
(87) International publication number: WO 2012/043645

(57) **Abstract**

A fuel cell device capable of appropriately controlling stack temperature both before and after degradation of a fuel cell stack is provided.

Afuel cell device furnished with a fuel cell stack 14, a fuel flow rate regulator unit 38, an air flow rate regulator unit 45, a generating chamber temperature sensor 142, and a control unit 110, whereby control unit 110 controls supply flow rate AF so that stack temperature Ts is within temperature range A; control unit 110 determines degradation of fuel cell stack 14 and controls flow rate AF so that if fuel cell stack 14 is not degrading, it increases flow rate AF to return stack temperature Ts to within the range A, and if degradation is ongoing, it does not permit an increase in flow rate AF to the supply amount required to return stack temperature Ts to the range A.

## Description

### Technical Field

0001 The present invention pertains to a fuel cell device, and more particularly to a fuel cell device capable of adjusting the fuel cell stack temperature using generating air.

### Background Art

0002 In conventional fuel cell devices if a fuel cell stack temperature temporarily rose due to a load following operation of a fluctuating power load, a control was implemented to increase the supplied amount of generating air, which is an oxygen-containing gas, in order to maintain the cell stack temperature in an appropriate temperature range (for example, see Patent Citation 1). In the device described in Patent Citation 1, operation of the device is stopped when an elevated cell stack temperature fails to return to an appropriate temperature range, regardless of any increase in the amount of generating air supplied.

### Prior Art References

### Patent References

0003 Patent Citation 1: Published Unexamined Application 2007-287633

### Summary of the Invention

### Problems the Invention Seeks to Resolve

0004 Cell stack temperatures do rise temporarily due to power load increases as described above, but they also rise due to degradation of fuel cells. For example, if the effective electrode surface area usable to implement generating reactions is reduced due to a degradation of the fuel cell unit such as peeling of the electrode layer, a portion of the fuel gas intended to be supplied for generation would normally be combusted as exhaust gas without being supplied for electrical generation, and the amount of heat emitted due to combustion would increase. This causes the cell stack temperature to rise. Also, this degradation-induced temperature rise would be permanent, not temporary.

0005 Therefore a control was conventionally implemented to simply increase the generating air supply amount so as to maintain cell stack temperatures in an appropriate temperature range, without distinguishing between temporary cell stack temperature rises caused by power load following and cell stack temperature rises caused by degradation. I.e., if there is not a large power load, the amount of rise in the stack temperature is primarily due to degradation, but in the past the appropriate temperature range was maintained by increasing the generating air supply amount even in cases where the appropriate temperature range was exceeded due to the rise amounts caused by degradation.

0006 However the problem was that to return a cell stack temperature to the appropriate temperature range when its rise is caused by degradation always required increasing the amount of generating air supplied. There was an additional problem in that if fuel cell stack degradation occurred, it was advantageous from the standpoint of maintaining output power performance to maintain a somewhat higher temperature, but if the cell stack temperature was forcibly returned to the appropriate temperature range by increasing the generating air supply amount, only a degraded output power performance could be achieved, and if an attempt was made to force power output as normal in that state, an extra generating load was imposed on the remaining effective portion, further promoting degradation.

0007 The present invention was undertaken to resolve this type of issue, and has the object of providing a fuel cell device capable of executing appropriate stack temperature control both before and after fuel cell stack degradation.

### Means for Resolving the Problem

0008 In order to accomplish the above objectives, the present invention is a fuel cell device comprising a fuel cell stack for generating power by reacting fuel gas and oxygen-containing gas; a fuel gas supply means for supplying fuel gas to the fuel cell stack; an oxygen-containing gas supply means for supplying oxygen-containing gas to the fuel cell stack; a temperature detection means for detecting the temperature of the fuel cell stack; and a control device for controlling a supply flow rate of oxygen-containing gas, wherein the control device controls the supply flow rate of oxygen-containing fuel gas so that the cell stack is within an appropriate temperature range; wherein the control device is constituted to determine degradation of the fuel cell stack, and to execute control to increase the supply flow rate of oxygen-containing gas so as to return the stack temperature to the appropriate temperature range when the fuel cell stack is not in a degraded state, and to execute control of the supply flow rate of oxygen-containing gas so as not to increase the supply flow rate of oxygen-containing gas until reaching the supply flow rate required to return the cell stack temperature to the appropriate temperature range when the fuel cell stack is in a degraded state.

0009 If the stack temperature rise is a temporary one caused by power load following or the like, it is desirable to return the stack temperature quickly to the appropriate temperature range by increasing the supply flow rate of oxygen-containing gas. On the other hand, if the rise in stack temperature is caused by degradation, it is desirable to maintain the stack temperature at some degree of high temperature, not returning it to the appropriate temperature range, since fuel cell output power performance can be maintained. I.e., maintaining some degree of high temperature in the cell stack works as a degradation correction relative to power output performance.

0010 In the present invention if the stack temperature departs from the appropriate temperature range due to a temporary temperature rise in a non-degraded state, the supply flow rate of oxygen-containing gas is increased in order to return it quickly to the appropriate temperature range. However in the present invention if the stack temperature departs from the appropriate temperature range due to a permanent temperature rise caused by degradation, the stack temperature can be stabilized at a thermally balanced temperature somewhat above the appropriate temperature range by not attempting to force the stack temperature back to the appropriate temperature range, and not increasing the supply flow rate of oxygen-containing gas up to the supply flow rate required to return the stack temperature to the appropriate temperature range. Thus in the present invention a quick return to the appropriate temperature range relative to temporary rises in stack temperature can be accomplished, while on the other hand for permanent temperature rises caused by degradation, output power performance of the degraded cell stack can be compensated by holding at a temperature higher than the appropriate temperature range, thereby obtaining the rated output performance.

0011 In the present invention the control device makes a determination that the fuel cell has degraded if the cell stack temperature continues to be outside the appropriate temperature range for a predetermined time period, and when fuel cell degradation is determined, it suppresses increases in the supply flow rate of oxygen-containing gas.
In the present invention thus constituted, a judgment of whether a stack temperature rise is temporary or permanent can be made by a simple control, without creating a complicated judgment processing process for the purpose, by measuring the length of the continuous period over which the cell stack temperature is outside the appropriate temperature range, so that for both temporary and permanent temperature rises, stack temperature can be maintained at temperatures respectively appropriate to each.

0012 In the present invention there is preferably an upper limit value set for the supply flow rate of oxygen-containing gas, and the control device does permit increases after the supply flow rate of oxygen-containing gas reaches the upper limit value.
In the present invention thus constituted, once the supply flow rate of oxygen-containing gas reaches the upper limit value, the supply flow rate will be fixed thereafter, so the stack temperature can be stably maintained at the appropriate temperature in a degraded state.

0013 In the present invention, the upper limit value for the supply flow rate of oxygen-containing gas is fixed, regardless of the size of the deviation of the stack temperature from the appropriate temperature range.
In the present invention thus constituted, because the greater the degree of degradation of the cell stack, the more the cell stack temperature settles at a high temperature, the level of the cell stack temperature is effective for maintaining power output performance. Therefore a stack temperature appropriate for maintaining power output performance can be achieved in proportion to the extent of degradation at the time of degradation.

0014 In the present invention the speed of increase in supply flow rate of oxygen-containing gas is set high in proportion to the size of the deviation of the stack temperature from the appropriate temperature range.
In the present invention thus constituted, temporary rises in stack temperature can be quickly returned to the appropriate temperature range, whereas for temperature rises caused by degradation, the supply flow rate of oxygen-containing gas is limited by the upper limit value even if deviation is large and the speed of increase in the supply flow rate of oxygen-containing gas is set high, so excessive rises in the supply flow rate of oxygen-containing gas can be suppressed.

0015 In the present invention if the stack temperature is equal to or greater than a predetermined temperature, and is within the appropriate temperature range, the supply flow rate of oxygen-containing gas is preferably not changed.
In the present invention thus constituted, the temperature band in which the stack temperature is equal to or greater than a predetermined temperature and also within the appropriate temperature range becomes the deadband region in which fluctuations in the supply flow rate of oxygen-containing gas is not allowed. Providing this type of deadband region results in waiting period for a stack temperature following delay, so the stack temperature is prevented from continuing to fluctuate without settling on a specific value.

### Effect of the Invention

0016 The fuel cell system of the present invention is able to prevent the occurrence of carbon deposits, reforming catalyst degradation and the like which can occur at restart, and can thereby enable long operating life.

### Brief Description of Figures

0017
Figure 1: An overview diagram showing a fuel cell system according to an embodiment of the present invention.
Figure 2: A front elevation cross section showing a fuel cell module in a fuel cell system according to an embodiment of the present invention.
Figure 3: A sectional diagram along line III-III in Figure 2.
Figure 4: A partial cross section showing an individual fuel cell unit in a fuel cell system according to an embodiment of the present invention.
Figure 5: A perspective view showing cell stack in a fuel cell system according to an embodiment of the present invention.
Figure 6: Ablock diagram showing a fuel cell system according to an embodiment of the present invention.
Figure 7: A timing chart showing the action at startup of fuel cell system according to an embodiment of the present invention.
Figure 8: A timing chart showing the action upon stopping of fuel cell system according to an embodiment of the present invention.
Figure 9: A graph showing changes over time in stack temperature and generating air supply flow rate in a fuel cell system according an embodiment of the present invention.
Figure 10: A graph showing changes over time in stack temperature and generating air supply flow rate in a fuel cell system according an embodiment of the present invention.
Figure 11: A diagram showing the control flow for processing changes in the generating air supply flow rate for a fuel cell system according to an embodiment of the present invention.

### Embodiments of the Invention

0018 Next, referring to the attached drawings, a solid oxide fuel cell (SOFC) device according to an embodiment of the present invention will be explained.

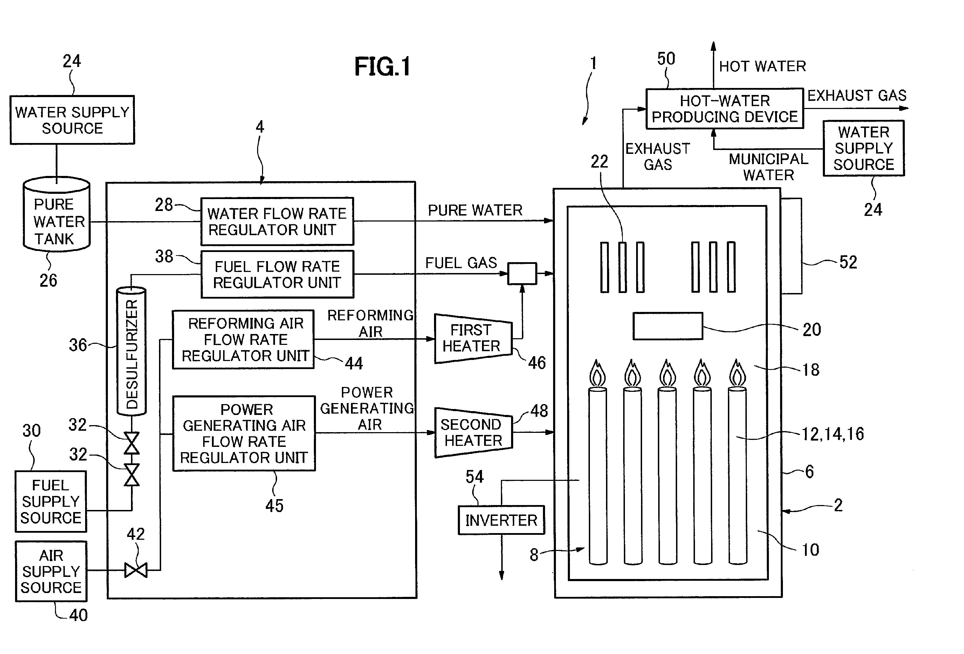

Figure 1 is an overview diagram showing a solid oxide fuel cell (SOFC) device according to an embodiment of the present invention. As shown in Figure 1, the solid oxide fuel cell (SOFC) device of this embodiment of the present invention is furnished with a fuel cell module 2 and an auxiliary unit 4.

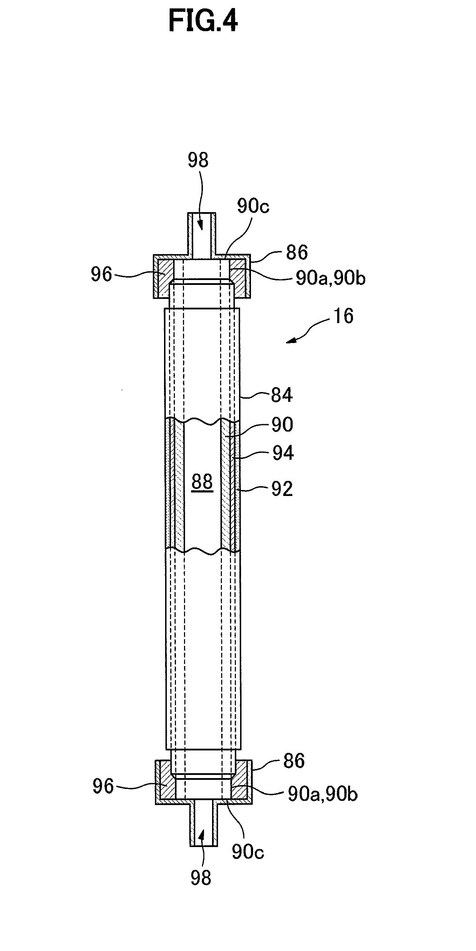

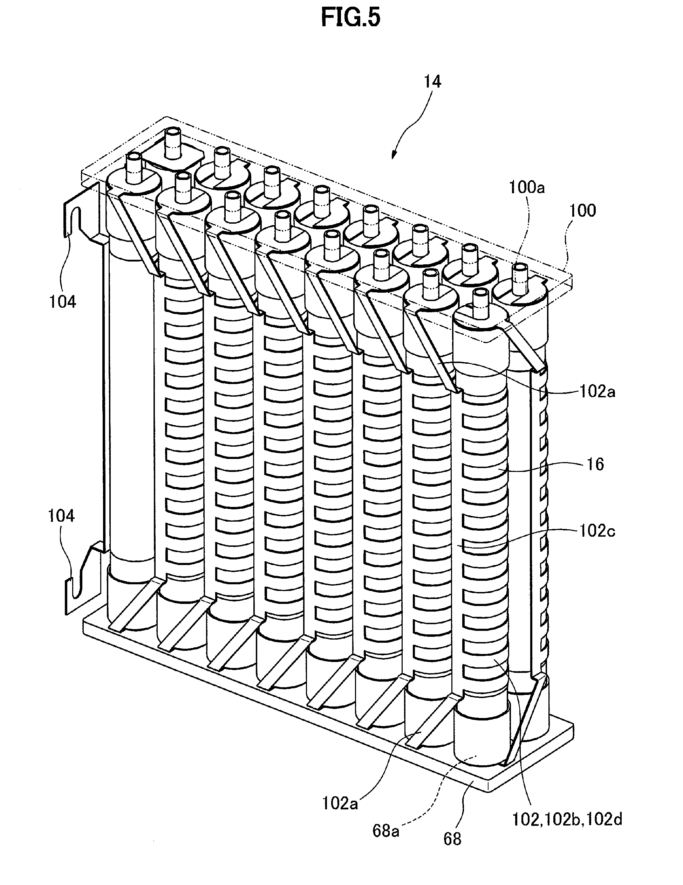

0019 The fuel cell module 2 is furnished with a housing 6; within this housing 6, a sealed space 8 is formed, mediated by thermal insulation (not shown; thermal insulation is not a mandatory structure, and may be omitted). Note that it is acceptable not to provide thermal insulation. A fuel cell assembly 12 for carrying out the electrical power generating reaction using fuel gas and oxidizer (air) is disposed in a generating chamber 10, which is the lower part of this sealed space 8. This fuel cell assembly 12 is furnished with ten fuel cell stacks 14 (see Figure 5); the fuel cell stack 14 comprises 16 fuel cell units 16 (see Figure 4). Thus, the fuel cell assembly 12 has 160 fuel cell units 16, all of which are serially connected.

0020
A combustion chamber 18 is formed above the aforementioned power generating chamber 10 in the sealed space 8 of the fuel cell module 2; residual fuel gas and residual oxidant (air) not used in the electrical generation reaction are burned in this combustion chamber 18 to producing exhaust gas.
A reformer 20 for reforming fuel gas is disposed at the top of the combustion chamber 18; the reformer 20 is heated by the heat of residual gas combustion to a temperature at which the reforming reaction can take place. An air heat exchanger 22 for receiving the heat of combustion and heating the air is further disposed above this reformer 20.

0021 Next, the auxiliary unit 4 is furnished with a pure water tank 26 for holding water from a municipal or other water supply source 24 and filtering it into pure water, and a water flow rate regulator unit 28 (a "water pump" or the like driven by a motor) for regulating the flow rate of water supplied from the reservoir tank. The auxiliary tank 4 is further furnished with a gas shutoff valve 32 for shutting off the fuel gas supplied from a fuel supply source 30 such as municipal gas or the like, a desulfurizer 36 for desulfurizing the fuel gas, and a fuel flow rate regulator unit 38 (a "fuel pump" or the like driven by a motor) for regulating the flow rate of fuel gas. Furthermore, the auxiliary unit 4 is furnished with an electromagnetic valve 42 for shutting off air serving as an oxidant and supplied from an air supply source 40, a reforming air flow rate regulator unit 44 and generating air flow rate regulator unit 45 ("air blower" or the like driven by a motor) for regulating air flow rate, a first heater 46 for heating reforming air supplied to the reformer 20, and a second heater 48 for heating a generating air supplied to the power generating chamber. This first heater 46 and second heater 48 are provided in order to efficiently raise the temperature at startup, but may be omitted.

0022 Next, a hot-water producing device 50 supplied with exhaust gas is connected to the fuel cell module 2. Municipal water from a water supply source 24 is supplied to this hot-water producing device 50; this water is turned into hot water by the heat of the exhaust gas, and is supplied to a hot water reservoir tank in an external water heater (not shown).
The fuel cell module 2 is provided with a control box 52 for controlling the supply flow rate of fuel gas and the like.
Furthermore, an inverter 54 serving as an electrical power extraction unit (electrical power conversion unit) for supplying electrical power generated by the fuel cell module to the outside is connected to fuel cell module 2.

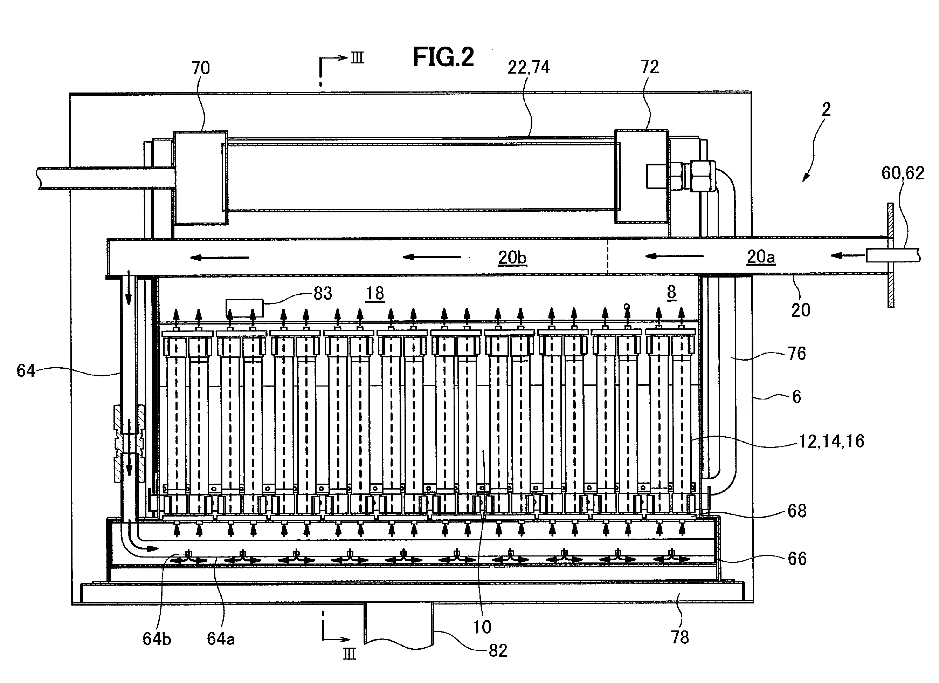

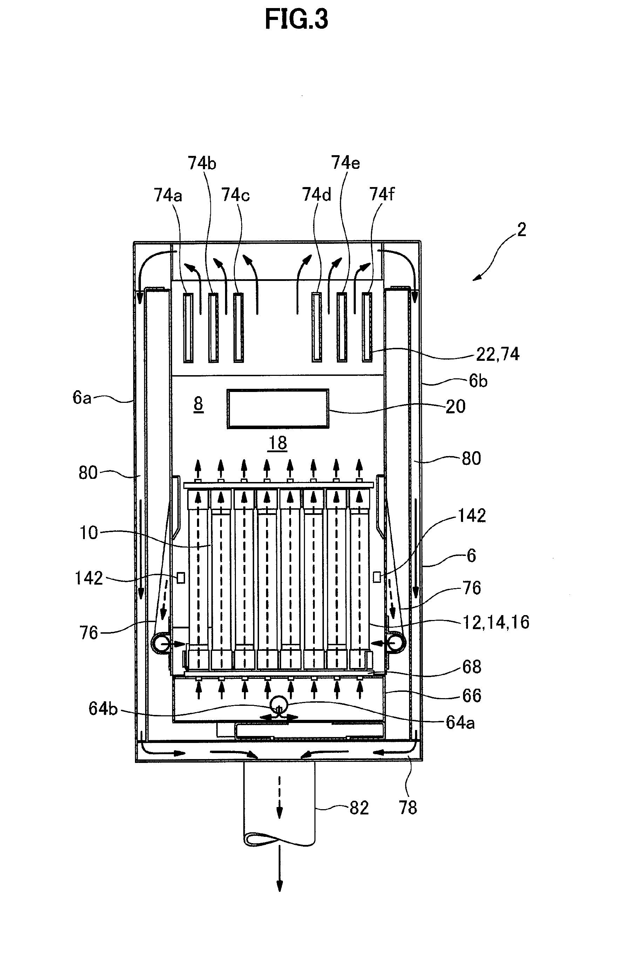

0023 The internal structure of the solid oxide fuel cell (SOFC) device according to this embodiment of the present invention is explained using Figures 2 and 3. Figure 2 is a side elevation cross section showing the fuel cell module in a solid oxide fuel cell (SOFC) device according to an embodiment of the present invention; and Figure 3 is a sectional diagram along line III-III of Figure 2.
As shown in Figures 2 and 3, the fuel cell assembly 12, the reformer 20, and the air heat exchanger 22 are arranged in sequence starting from the bottom in the sealed space 8 within the housing 6 of the fuel cell module 2, as described above.

0024 A pure water guide pipe 60 for introducing pure water on the upstream end of the reformer 20, and a reform gas guide pipe 62 for introducing the fuel gas and reforming air to be reformed, are attached to the reformer 20; a vaporizing section 20a and a reforming section 20b are formed in sequence starting from the upstream side within the reformer 20, and the reforming section 20b is filled with a reforming catalyst. Fuel gas and air blended with the steam (pure water) introduced into the reformer 20 is reformed by the reforming catalyst used to fill in the reformer 20. Appropriate reforming catalysts are used, such as those in which nickel is imparted to the surface of alumina spheres, or ruthenium is imparted to the surface of alumina spheres.

0025 A fuel gas supply line 64 is connected to the downstream end of the reformer 20; this fuel gas supply line 64 extends downward, then further extends horizontally within a manifold 66 formed under fuel cell assembly 12. Multiple fuel supply holes 64b are formed on the bottom surface of a horizontal portion 64a of the fuel gas supply line 64; reformed fuel gas is supplied into manifold 66 from these fuel supply holes 64b.

0026 A lower support plate 68 provided with through holes for supporting the above-described fuel cell stack 14 is attached at the top of manifold 66, and fuel gas in the manifold 66 is supplied into the fuel cell units 16.

0027 Next, the air heat exchanger 22 is provided over the reformer 20. This air heat exchanger 22 is furnished with an air concentration chamber 70 on the upstream side and two air distribution chambers 72 on the downstream side; the air concentration chamber 70 and the distribution chambers 72 are connected using six air flow conduits 74. Here, as shown in Figure 3, three air flow conduits 74 form a set (74a, 74b, 74c, 74d, 74e, 74f); air in the air concentration chamber 70 flows from each set of the air flow conduits 74 to the respective air distribution chambers 72.

0028 Air flowing in the six air flow conduits 74 of the air heat exchanger 22 is pre-heated by rising combustion exhaust gas from combustion chamber 18.
Air guide pipes 76 are connected to each of the respective air distribution chambers 72; these air guide pipes 76 extend downward, communicating at the bottom end side with the lower space in the generating chamber 10, and introducing preheated air into the generating chamber 10.

0029 Next, an exhaust gas chamber 78 is formed below the manifold 66. As shown in Figure 3, an exhaust gas conduit 80 extending in the vertical direction is formed on the insides of the front surface 6a and the rear surface 6b which form the faces in the longitudinal direction of the housing 6; the top end side of the exhaust gas conduit 80 communicates with the space in which the air heat exchanger 22 is disposed, and the bottom end side communicates with the exhaust gas chamber 78. An exhaust gas discharge pipe 82 is connected at approximately the center of the bottom surface of the exhaust gas chamber 78; the downstream end of this exhaust gas discharge pipe 82 is connected to the above-described hot water producing device 50 shown in Figure 1.
As shown in Figure 2, an ignition device 83 for starting the combustion of fuel gas and air is disposed on combustion chamber 18.

0030 Next, referring to Figure 4, the fuel cell unit 16 will be explained. Figure 4 is a partial cross section showing a fuel cell unit in a solid oxide fuel cell (SOFC) device according to an embodiment of the present invention.
As shown in Figure 4, the fuel cell unit 16 is furnished with a fuel cell 84 and internal electrode terminals 86, respectively connected to the respective terminals at the top and bottom of the fuel cell 84.
The fuel cell 84 is a tubular structure extending in the vertical direction, furnished with a cylindrical internal electrode layer 90, on the inside of which is formed a fuel gas flow path 88, a cylindrical external electrode layer 92, and an electrolyte layer 94 between the internal electrode layer 90 and the external electrode layer 92. This internal electrode layer 90 is a fuel electrode through which fuel gas passes, and is a (-) pole, while the external electrode layer 92 is an air electrode for contacting the air, and is a (+) pole.

0031
The internal electrode terminals 86 attached at the top end and bottom end of the fuel cell unit 16 have the same structure, therefore the internal electrode terminal 86 attached at the top end side will be specifically explained. The top portion 90a of the inside electrode layer 90 is furnished with an outside perimeter surface 90b and top end surface 90c, exposed to the electrolyte layer 94 and the outside electrode layer 92. The inside electrode terminal 86 is connected to the outer perimeter surface 90b of the inside electrode layer 90 through a conductive seal material 96, and is electrically connected to the inside electrode layer 19 by making direct contact with the top end surface 90c of the inside electrode layer 90. A fuel gas flow path 98 communicating with a fuel gas flow path 88 in the inside electrode layer 90 is formed at the center portion of the inside electrode terminal 86.

0032 The inside electrode layer 90 is formed, for example, from at least one of a mixture of Ni and zirconia doped with at least one type of rare earth element selected from Ca, Y, Sc, or the like; or a mixture of Ni and ceria doped with at least one type of rare earth element; or any mixture of Ni with lanthanum gallate doped with at least one element selected from Sr, Mg, Co, Fe, or Cu.

0033 The electrolyte layer 94 is formed, for example, from at least one of the following: zirconia doped with at least one type of rare earth element selected from among Y, Sc, or the like; ceria doped with at least one type of selected rare earth element; or lanthanum gallate doped with at least one element selected from among Sr or Mg.

0034 The outside electrode layer 92 is formed, for example, from at least one of the following: lanthanum manganite doped with at least one element selected from among Sr or Ca; lanthanum ferrite doped with at least one element selected from among Sr, Co, Ni, or Cu; lanthanum cobaltite doped with at least one element selected from among Sr, Fe, Ni, or Cu; silver, or the like.

0035 Next, referring to Figure 5, the fuel cell stack 14 will be explained. Figure 5 is a perspective view showing a fuel cell stack in a solid oxide fuel cell (SOFC) device according to an embodiment of the present invention.
As shown in Figure 5, the fuel cell stack 14 is furnished with sixteen fuel cell units 16; the top and bottom insides of these fuel cell units 16 are respectively supported by a lower support plate 68 and upper support plate 100. Through holes 68a and 100a, through which the inside electrode terminal 86 can penetrate, are provided on this lower support plate 68 and outer support plate 100.

0036 In addition, a current collector 102 and an external terminal 104 are attached to the fuel cell unit 16. The current collector 102 is integrally formed by a fuel electrode connecting portion 102a, which is electrically connected to the inside electrode terminal 86 attached to the inside electrode layer 90 serving as the fuel electrode, and by an air electrode connecting portion 102b, which is electrically connected to the entire external perimeter of the outside electrode layer 92 serving as the air electrode. The air electrode connecting portion 102b is formed of a vertical portion 102c extending vertically along the surface of the outside electrode layer 92, and multiple horizontal portions 102d extending in the horizontal direction from the vertical portion 102c along the surface of the outside electrode layer 92. The fuel electrode connecting portion 102a extends linearly in an upward or downward diagonal direction from the vertical portion 102c of the air electrode connecting portion 102b toward the inside electrode terminals 86 positioned in the upper and lower directions on the fuel cell unit 16.

0037 Furthermore, inside electrode terminals 86 at the top and bottom ends of the two fuel cell units 16 positioned at the end of the fuel cell stack 14 (at the front and back sides on the left edge in Figure 5) are respectively connected to the external terminals 104. These external terminals 104 are connected to the external terminals 104 (not shown) at the ends of the adjacent fuel cell stack 14, and as described above, all of the 160 fuel cell units 16 are connected in series.

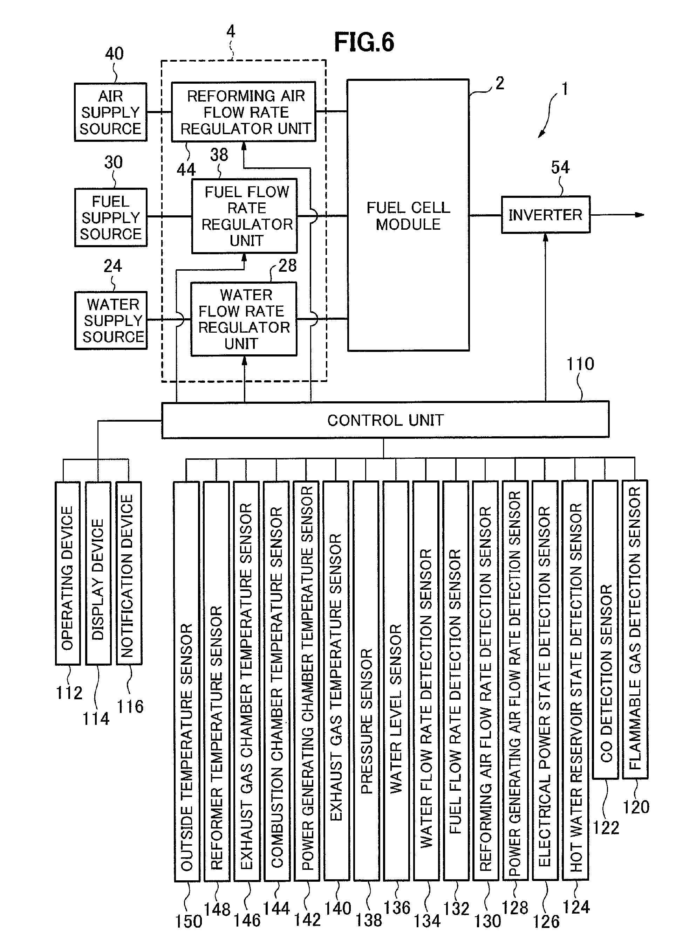

0038 Next, referring to Figure 6, the sensors attached to the solid oxide fuel cell (SOFC) device according to the present embodiment of the present invention will be explained. Figure 6 is a block diagram showing a solid oxide fuel cell (SOFC) device according to an embodiment of the present invention.
As shown in Figure 6, the solid oxide fuel cell device 1 is furnished with a control unit 110; an operating device 112 provided with operating buttons such as "ON" or "OFF" for user operation, a display device 114 for displaying various data such as a generator output value (Watts), and a notification device 116 for issuing warnings during abnormal states and the like are connected to the control unit 110. The notification device 116 may also be connected to a remote control center to inform the control center of abnormal states.

0039 Next, signals from the various sensors described below are input to the control unit 110.
First, flammable gas detection sensor 120 detects gas leaks and is attached to the fuel cell module 2 and the auxiliary unit 4.
The purpose of a CO detection sensor 122 is to detect leakage of CO in the exhaust gas, which is supposed to be exhausted to the outside via the exhaust gas conduit 80 and the like, into the external housing (not shown) which covers the fuel cell module 2 and the auxiliary unit 4.
A water reservoir state detection sensor 124 detects the temperature and amount of hot water in a water heater (not shown).

0040 An electrical power state detection sensor 126 detects current, voltage, and the like in the inverter 54 and in a distribution panel (not shown).
A power generator air flow rate detection sensor 128 detects the flow rate of power generator air supplied to the generating chamber 10.
A reforming air flow rate sensor 130 detects the flow rate of reforming air supplied to the reformer 20.
A fuel flow rate sensor 132 detects the flow rate of fuel gas supplied to the reformer 20.

0041 A water flow rate sensor 134 detects the flow rate of pure water (steam) supplied to the reformer 20.
A water level sensor 136 detects the water level in pure water tank 26.
A pressure sensor 138 detects pressure on the upstream side outside the reformer 20.
An exhaust temperature sensor 140 detects the temperature of exhaust gas flowing into the hot water producing device 50.

0042 As shown in Figure 3, a generating chamber temperature sensor 142 is disposed on the front surface side and rear surface side around the fuel cell assembly 12, and detects the temperature around the fuel cell stack 14 in order to estimate the temperature of the fuel cell stack 14 (i.e., of the fuel cell 84 itself).
A combustion chamber temperature sensor 144 detects the temperature in combustion chamber 18.
An exhaust gas chamber temperature sensor 146 detects the temperature of exhaust gases in the exhaust gas chamber 78.
A reformer temperature sensor 148 detects the temperature of the reformer 20 and calculates the temperature of the reformer 20 from the intake and exit temperatures on the reformer 20.
If the solid oxide fuel cell (SOFC) device is placed outdoors, the outside temperature sensor 150 detects the temperature of the outside atmosphere. Sensors to detect outside atmospheric humidity and the like may also be provided.

0043 Signals from these various sensors are sent to the control unit 110; the control unit 110 sends control signals to the water flow rate regulator unit 28, the fuel flow rate regulator unit 38, the reforming air flow rate regulator unit 44, and the power generating air flow rate regulator unit 45 based on data from the sensors, and controls the flow rate in each of these units.
The control unit 110 sends control signals to the inverter 54 to control the supplied electrical power.

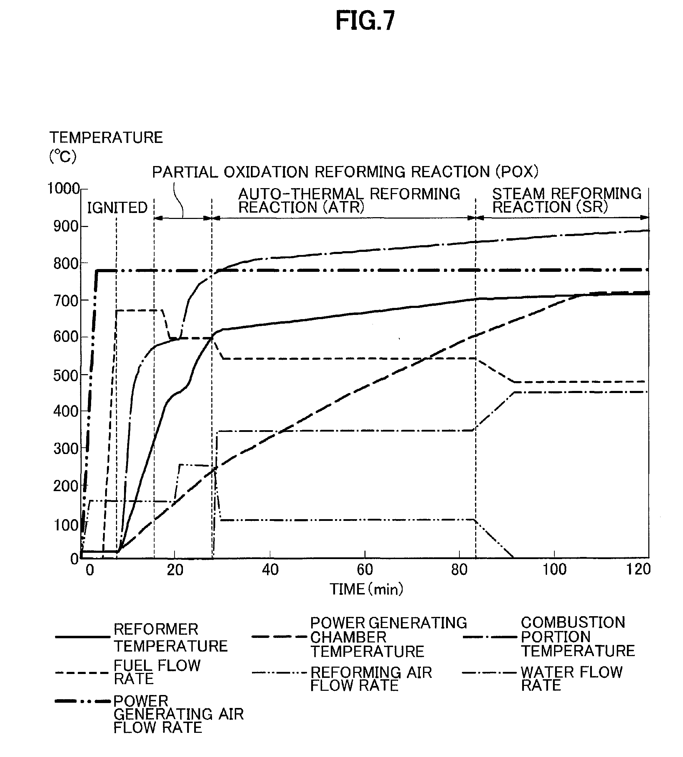

0044 Next, referring to Figure 7, the operation of a solid oxide fuel cell (SOFC) device according to the present embodiment at the time of start up will be explained. Figure 7 is a timing chart showing the operations at start up of a solid oxide fuel cell (SOFC) device according to an embodiment of the present invention.
At the beginning, in order to warm up the fuel cell module 2, the operation starts in a no-load state, i.e., with the circuit which includes the fuel cell module 2 in an open state. At this point current does not flow in the circuit, therefore the fuel cell module 2 does not generate electricity.

0045 First, reforming air is supplied from the reforming air flow rate regulator unit 44 to the reformer 20 on the fuel cell module 2 via the first heater 46. At the same time, power generating air is supplied from the generating air flow rate regulator unit 45 to the air heat exchanger 22 of the fuel cell module 2 via the second heater 48, and the power generating air reaches the generating chamber 10 and the combustion chamber 18.
Immediately thereafter, fuel gas is also supplied from the fuel flow rate regulator unit 38, and fuel gas into which reforming air is blended passes through the reformer 20, the fuel cell stack 14, and the fuel cell units 16 to reach the combustion chamber 18.

0046
Next, ignition is brought about by the ignition device 83, and fuel gas and air (reforming air and power generating air) supplied to the combustion chamber 18 is combusted. This combustion of fuel gas and air produces exhaust gas; the generating chamber 10 is warmed by this exhaust gas, and when the exhaust gas rises in the sealed space 8 of the fuel cell module 2, the fuel gas, which includes the reforming air in the reformer 20 is warm, as is the power generating air inside the air heat exchanger 22.

0047
At this point, fuel gas into which reforming air is blended is supplied to the reformer 20 by the fuel flow rate regulator unit 38 and the reforming air flow rate regulator unit 44, therefore the partial oxidation reforming reaction POX given by Expression (1) proceeds in the reformer 20. This partial oxidation reforming reaction POX is an exothermic reaction, and therefore has favorable starting characteristics. This elevated-temperature fuel gas is supplied from the fuel gas supply line 64 to the bottom of the fuel cell stack 14, and by this means the fuel cell stack 14 is heated from the bottom; and the combustion chamber 18 is also heated by the combustion of the fuel gas and air, so that the fuel cell stack 14 is also heated from above, thereby enabling an essentially uniform rise in temperature in the vertical direction of the fuel cell stack 14. Even though the partial oxidation reforming reaction POX is progressing, the ongoing combustion reaction between fuel gas and air is continued in the combustion chamber 18.

0048

CₘHₙ + xO₂ → aCO₂ +bCO + cH₂ (1)

0049 After the start of the partial oxidation reforming POX, when the reformer temperature sensor 148 senses that the reformer 20 has reached a predetermined temperature (e.g., 600°C), a premixed gas of fuel gas, reforming air and steam is supplied to the reformer 20 by the water flow rate regulator unit 28, the fuel flow rate regulator unit 38, and the reforming air flow rate regulator unit 44. At this point, an auto-thermal reforming reaction ATR, which makes use of both the aforementioned partial oxidation reforming reaction POX and the steam reforming reaction SR described below, proceeds in the reformer 20. This auto-thermal reforming reaction ATR can be internally thermally balanced, therefore the reaction proceeds in a thermally independent fashion inside the reformer 20. In other words, if oxygen (air) is abundant, heat emission by the partial oxidation reforming reaction POX dominates, and if steam is abundant, the endothermic steam reforming reaction SR dominates. At this stage, the initial stage of startup has passed and some degree of elevated temperature has been achieved within the generating chamber 10, therefore even if the endothermic reaction is dominant, no major drop in temperature will be caused. Also, the combustion reaction continues within the combustion chamber 18 even as the auto-thermal reforming reaction ATR proceeds.

0050 When the reformer temperature sensor 146 senses that the reformer 20 has reached a predetermined temperature (e.g., 700°C) after starting auto-thermal reforming reaction ATR shown in Equation (2), the supply of reforming air by the reforming air flow rate regulator unit 44 is stopped and the supply of steam by water flow rate regulator unit 28 is increased. A gas containing no air and only containing fuel gas and steam is thus supplied to the reformer 20, where the steam reforming reaction SR of Expression (3) proceeds.

0051

CₘHₙ + xO₂ + yH₂O → aCO₂ + bCO + cH₂ (2)

CₘHₙ + xH₂O → aCO₂ + bCO +cH₂ (3)

0052 This steam reforming reaction SR is an endothermic reaction, therefore the reaction proceeds as a thermal balance is maintained with the combustion heat from the combustion chamber 18. At this stage, the fuel cell module is in the final stages of startup, therefore the temperature has risen to a sufficiently high level within the generating chamber 10 so that no major temperature drop is induced in the power generating chamber 10 even though an endothermic reaction is proceeding. Also, the combustion reaction continues to proceed in the combustion chamber 18 even as the steam reforming reaction SR is proceeding.

0053 Thus, after the fuel cell module 2 has been ignited by the ignition device 83, the temperature inside the generating chamber 10 gradually rises as a result of the partial oxidation reforming reaction POX, the auto-thermal reforming reaction ATR, and the steam reforming reaction SR proceeding in sequence. Next, when the temperatures of interior of the generating chamber 10 and individual fuel cells 84 reach a predetermined generating temperature below the rated temperature at which the fuel cell module 2 can be stably operated, the circuit including the fuel cell module 2 is closed and electrical generation by the fuel cell module 2 begins, such that current flows in the circuit. Generation of electricity by the fuel cell module 2 causes the fuel cell 84 itself to emit heat, such that the temperature of the fuel cell 84 rises. As a result, the rated temperature for operating the fuel cell module 2, for example 600°C to 800°C, is reached.

0054 Thereafter, in order to maintain the rated temperature, fuel gas and air are supplied in a quantity greater than the fuel gas and air consumed by individual fuel cells 84 to continue combustion inside the combustion chamber 18. During electrical generation, generation of electricity by the high reforming efficiency steam reforming reaction SR proceeds.

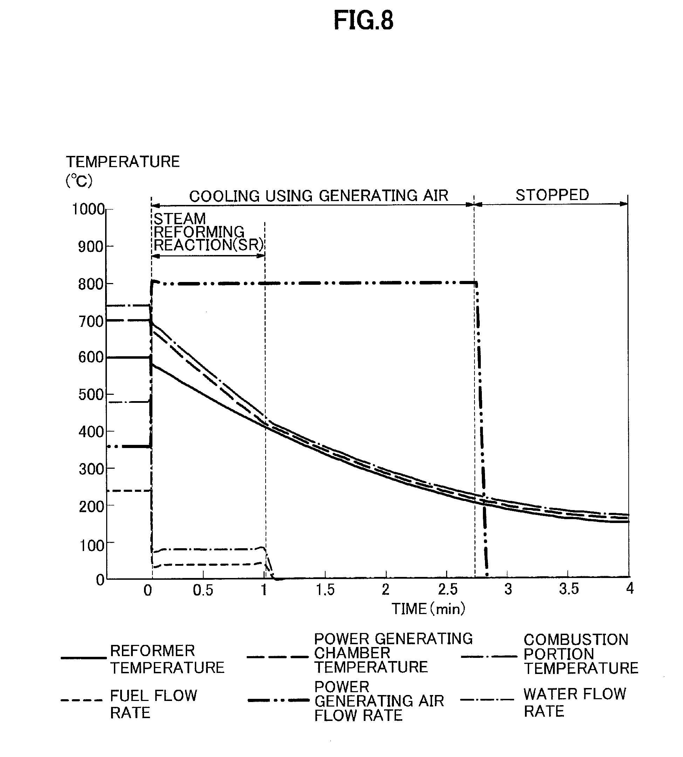

0055 Next, referring to Figure 8, the operation upon stopping the solid oxide fuel cell (SOFC) device according to the embodiment of the present invention will be explained. Figure 8 is a timing chart showing the action when operation of a solid oxide fuel cell (SOFC) device according to an embodiment of the present invention is stopped.
As shown in Figure 8, when the operation of the fuel cell module 2 is stopped, the fuel flow rate regulator unit 38 and the water flow rate regulator unit 28 are first controlled to reduce the flow rate of fuel gas and steam being supplied to the reformer 20.

0056
When stopping the operation of the fuel cell module 2, the flow rate of power generating air supplied by the power generating air flow rate regulator unit 45 into the fuel cell module 2 is being increased at the same time that the flow rate of fuel gas and steam being supplied to the reformer 20 is being reduced; the fuel cell assembly 12 and the reformer 20 are air cooled to reduce their temperatures. Thereafter when the temperature in the generating chamber gets down to a predetermined temperature, for example 400°C, the supply of fuel gas and steam to the reformer 20 is stopped and the steam reforming reaction SR in the reformer 20 ends. Supply of power generating air continues until the temperature in the reformer 20 drops to a predetermined temperature, e.g. 200°C; when the predetermined temperature is reached, the supply of power generating air from the power generating air flow rate regulator unit 45 is stopped.

0057
Thus in the present embodiment the steam reforming reaction SR by the reformer 20 and cooling by power generating air are used in combination, therefore when the operation of the fuel cell module 2 is stopped, that operation can be stopped relatively quickly.

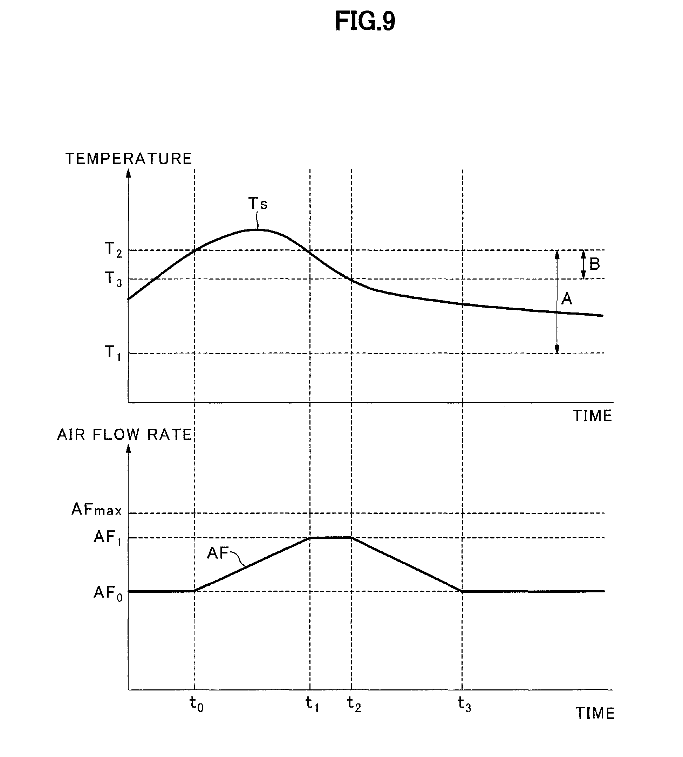

0058 Next, referring to Figures 9 through 11, we explain the control of secondary air (generating air) in the solid oxide fuel cell device 1 according to the present embodiment.
In this embodiment the generating chamber temperature sensor 142, which is a temperature detection means, measures the temperature close to the fuel cell stack 14 (i.e. individual fuel cells 84 themselves) as a stack temperature Ts. The control unit 110 acquires the measured stack temperature Ts, and as a basic processing control it controls the generating air flow rate regulator unit 45, which is an oxygen-containing gas supply means for supplying air as an oxygen-containing gas, so as to maintain the stack temperature Ts in the appropriate temperature range A (temperature T₁ to T₂) during operation.
The fuel cell stack 14 generates electrical power by a generating reaction between gas reformed for generation (in this example hydrogen gas) and oxygen-containing gas for generation (in this example air).

0059 In operations following completion of startup, the control unit 110 normally sets a supply flow rate AF of power generating air supplied to the fuel cell stack 14 at a specified supply flow rate AF₀ and controls the generating air flow rate regulator unit 45 to supply power generating air at the flow rate AF₀. Therefore if not in a state of following high load electrical power demands, and if the fuel cell stack 14 is not in a degraded state, the measured cell stack temperature Ts is maintained within the appropriate temperature range A.

0060 However, if the stack temperature Ts rises and exceeds the appropriate temperature range A due to a power load following operation or degradation of the fuel cell stack 14 or the like, the control unit 110 controls the generating air flow rate regulator unit 45 and adjusts the generating air supply flow rate AF so as to return the stack temperature Ts to within the appropriate temperature range A.

0061 Figure 9 shows an example of change over time in stack temperature Ts and generating air supply flow rate AF when stack temperature Ts has temporarily risen above the appropriate temperature range A due to a power load following operation.
In Figure 9, the supply flow rate AF is held at the predetermined supply flow rate AF₀ until time t₀, but when stack temperature Ts exceeds the upper limit temperature T₂ of the appropriate temperature range A at time t₀, the control unit 110 controls the generating air flow rate regulator unit 45 and adjusts the supply flow rate AF so as to increase the supply flow rate AF.

0062 At this point, the control unit 110 gradually increases the supply flow rate AF over time at a predetermined speed of increase or rate of increase. When supply flow rate AF is increased, cooling capacity to the fuel cell stack 14 is increased and stack temperature Ts begins to drop after the temperature rise caused by power load following operation thermally balances with cooling capacity. Note that the speed of increase or rate of increase means a rate of increase in the amount supplied per unit time.

0063
In Figure 9, the increase in supply flow rate is continued, and when the supply flow rate AF reaches a supply flow rate AF₁ at time t₁, the stack temperature Ts drops down to the upper limit temperature T₂. When the stack temperature Ts drops down to the upper limit temperature T₂ of the appropriate temperature range A, the control unit 110 stops the increase in supply flow rate AF and maintains the supply flow rate AF₁. In other words, the supply flow rate AF is not lowered immediately when stack temperature Ts goes below the upper limit temperature T₂; the temperature band from the upper limit temperature T₂ to a predetermined temperature T₃ (decrease start temperature) is deemed a deadband region B, in which the supply flow rata AF is not varied. Providing this type of deadband region B results in waiting time for following delay of the stack temperature Ts, so that stack temperature Ts can be prevented from continuing to fluctuate without settling on a specific value. Thereafter, when stack temperature Ts declines further and drops below the decrease start temperature T₃, which is the temperature set between the lower limit temperature T₁ and the upper limit temperature T₂, the control unit 110 reduces the supply flow rate AF at a predetermined reduction speed or rate of reduction, towards the supply flowa rate AF₀. The control unit 110 thus reduces the speed of the reduction of stack temperature Ts and causes stack temperature Ts to converge within the appropriate temperature range A. Note that the speed of decrease or rate of decrease means a rate of decrease in the amount supplied per unit time.
Note that in the present embodiment a maximum supply flow rate AFₘₐₓ, which is a maximum set value, is set for the supply flow rate AF, and the supply flow rate AF is not increased past the maximum supply flow rate AFₘₐₓ. In the present embodiment, the maximum supply flow rate AFₘₐₓ is set at a size equal to a 10% increase in the supply flow rate AF₀.

0064 Once the supply flow rate AF returns to the supply flow rate AF₀ at time t₃, the supply flow rate AF is thereafter maintained at the supply flow rate AF₀. That is, in Figure 9 the rise of stack temperature Ts is a temporary matter caused by power load following, therefore after the supply flow rate AF is returned to the supply flow rate AF₀, stack temperature Ts is maintained within the appropriate temperature range A.
Note that in the present embodiment the supply flow rate AF is varied linearly relative to elapsed time, but without such limitation, it may also be varied stepwise in predetermined temperature steps.

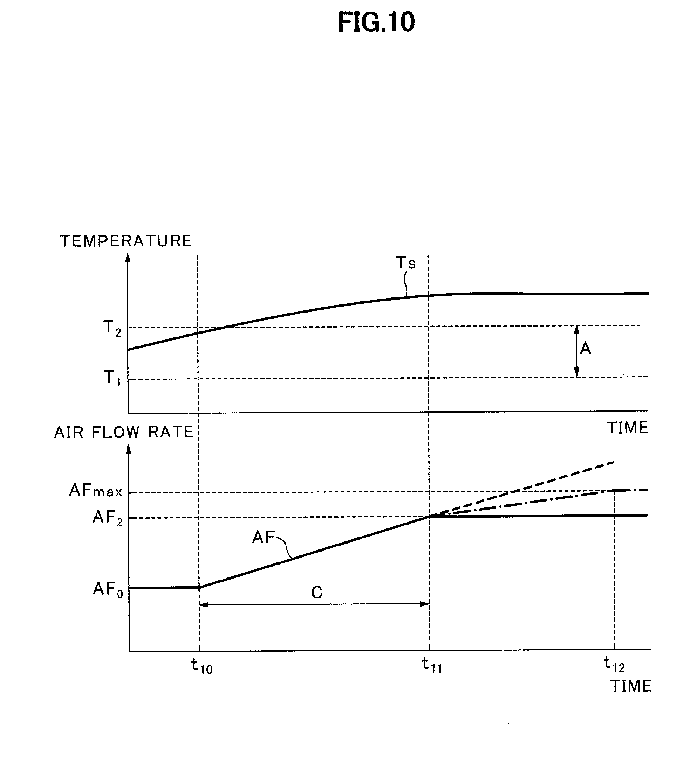

0065 Next, Figure 10 shows an example of change over time in stack temperature Ts and the generating air supply flow rate AF when stack temperature Ts has permanently risen due to degradation of the fuel cell stack 14.
In Figure 10, the supply flow rate AF is held at the predetermined supply flow rate AF₀ until time t₁₀, but when stack temperature Ts exceeds the upper limit temperature T₂ of the appropriate temperature range A at time t₁₀, the control unit 110 controls the generating air flow rate regulator unit 45 and adjusts the supply flow rate AF to increase the supply flow rate AF.

0066 At this point, the control unit 110, as in Figure 9, gradually increases the supply flow rate AF over time at a predetermined speed of increase in amount. If the supply flow rate AF is increased, cooling capacity relative to the fuel cell stack 14 is increased, so the speed of increase in stack temperature is reduced.

0067
The control unit 110 activates a timer starting from the time t₁₀ at which the increase of the supply flow rate AF is started. In Figure 10, when the timer elapsed time reaches a degradation determination time C without stack temperature Ts returning to within the appropriate temperature range A (time t₁₁), the control unit 110 determines that the fuel cell stack 14 has degraded. Based on this determination, the control unit 110 fixes the supply flow rate AF at the supply flow rate AF₂ as of time t₁₁ (solid line).

0068
At this point, stack temperature Ts can be returned to within the appropriate temperature range A by further increasing the supply flow rate AF from the supply flow rate AF₂, however the control unit 110 controls stack temperature Ts to a temperature above the appropriate temperature range A (i.e., the temperature at which the temperature rise caused by degradation is thermally balanced by the cooling capacity from the supply flow rate AF₂).

0069
After the degradation determination, once the supply flow rate AF is fixed at the supply flow rate AF₂, the supply flow rate AF₂ is thereafter replaced by a specified or normal supply flow rate (i.e., corresponding to the supply flow rate AF₀ before degradation).
Note that after the degradation has occurred in the fuel cell stack 14, if the power load is small, stack temperature Ts may return to within the appropriate temperature range A, even if generating air is now being supplied at the newly specified supply flow rate AF₂.

0070
Thus in the present embodiment, even if the supply flow rate AF continues to be increased during the predetermined degradation determination period C, and the stack temperature Ts has not returned to within the appropriate temperature range A, the rise in stack temperature Ts will be determined to be not temporary but permanent, resulting from the degradation of the fuel cell stack 14. If the fuel cell stack 14 has degraded, maintenance of a somewhat high stack temperature Ts functions as degradation compensation for maintaining output power performance as a fuel cell.

0071
Therefore if a degradation determination is made, the control unit 110 does not further increase the supply flow rate AF from the supply flow rate AF₂ to force stack temperature Ts back into the appropriate temperature range A, but rather prohibits an increase in the supply flow rate AF up to the amount required to return stack temperature Ts to within the appropriate temperature range A, thereby fixing the supply flow rate AF at the supply flow rate AF₂. Stack temperature Ts is by this means held at a temperature responsive to the relationship between degradation and the supply flow rate AF₂, at or below the service limit temperature of the fuel cell stack 14, and stack temperature Ts is maintained at a somewhat high level to assure power output performance.

0072
Note that when the supply flow rate AF is held at the supply flow rate AF₂, if stack temperature Ts seems likely to reach the service limit temperature, the control unit 110 may further increase the supply flow rate AF within a range at or below the maximum supply flow rate AFₘₐₓ.
In the present embodiment a determination of degradation was made using degradation determination time C, but without such limitation, degradation can also be determined to occur if the supply flow rate AF reaches a particular supply flow rate (e.g., the supply flow rate AF₂) when the supply flow rate AF is increased at a predetermined speed of increase in amount without stack temperature Ts returning to within the appropriate temperature range A. Therefore a determination of degradation is made if stack temperature Ts does not return to within the appropriate temperature range A despite an increase in the supply flow rate during a predetermined time interval and/or up to a predetermined flow rate.

0073 Also, in the above embodiment the supply flow rate AF is fixed at the supply flow rate AF₂ when a degradation determination is made, but without such limitation, the speed of increase in the supply flow rate AF after the determination of degradation (time t₁₁) can also be suppressed to a low level (see the dot-and-dash line in Figure 10).
In such cases, the increase of the supply flow rate AF is stopped when it reaches a particular supply flow rate (e.g., the maximum supply flow rate AFₘₐₓ) (time t₁₂), and the supply flow rate AF is maintained at that supply flow rate (the maximum supply flow rate AFₘₐₓ).
In the embodiment above the degradation determination is made using the stack temperature, but the method for judging degradation determination is not limited thereto. For example, degradation can be judged based on whether the generating efficiency at the time when the generated current value reaches a specified value has fallen to a predetermined value or below.

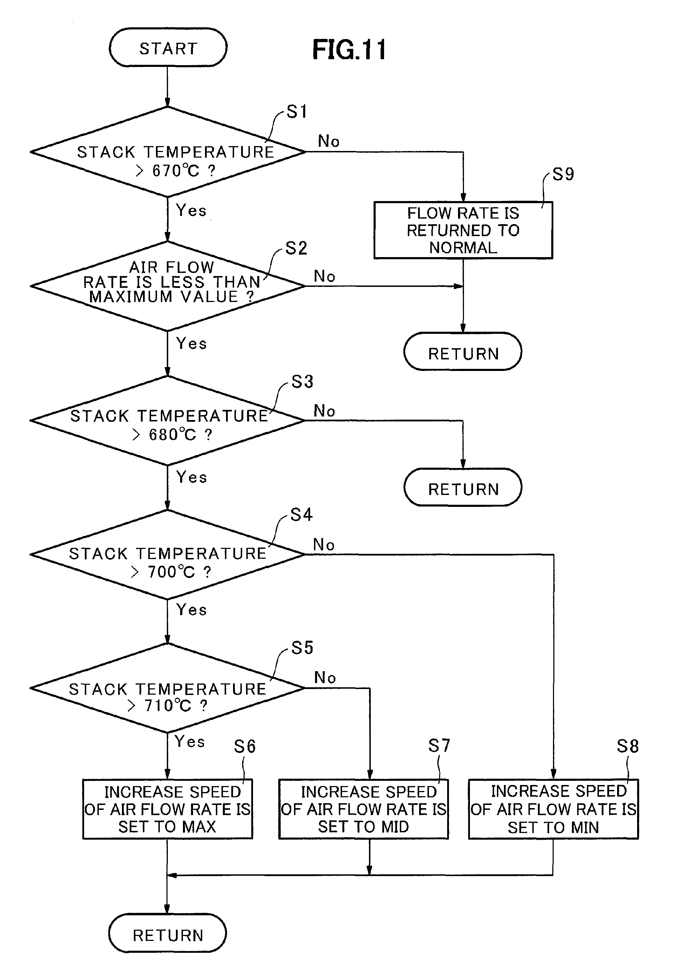

0074
Next, referring to Figure 11, we explain the processing flow for changing the speed of increasing the supply flow rate AF in response to stack temperature Ts.
The control unit 110 executes the processing flow shown in Figure 11 at a predetermined time cycle.
First, the control unit 110 determines whether stack temperature Ts is above 670°C (decrease start temperature T₃ within the appropriate temperature range A) (step S1).

0075
If stack temperature Ts is at or below 670°C (step S1; No), the control unit 110 transitions to processing to return the supply flow rate AF to the normal supply flow rate AF₀ (step S9) and terminates processing. Therefore if stack temperature Ts is at 670°C or below, the supply flow rate AF is maintained at the supply flow rate AF₀. Note that as shown in Figure 9, the processing in step S9 returns the supply flow rate AF gradually at a predetermined speed of decrease, but without limit thereto, it is also acceptable to return it in a step-wise or instantaneous manner.

0076
On the other hand if stack temperature Ts is higher than 670°C (step S1; Yes), the control unit 110 determines whether the supply flow rate AF is less than the maximum supply flow rate AFₘₐₓ (step S2).
If the supply flow rate AF is the maximum supply flow rate AFₘₐₓ (step S2; No), the supply flow rate AF cannot be increased any further, so the control unit 110 terminates processing. Therefore when the supply flow rate AF reaches the maximum supply flow rate AFₘₐₓ, the supply flow rate AF will be maintained at the maximum supply flow rate AFₘₐₓ so long as stack temperature Ts does not go to 670°C or below.
On the other hand if the supply flow rate AF is less than the maximum supply flow rate AFₘₐₓ (step S2; Yes), then there is margin to increase the supply flow rate AF, so the control unit 110 determines whether stack temperature Ts is above 680°C (the upper limit temperature T₂ of the appropriate temperature range A).

0077 If stack temperature Ts is not above 680°C (step S3; No), the control unit 110 does not yet change the supply flow rate AF at this point. I.e., the current supply flow rate is maintained since the control unit 110 terminates processing.
On the other hand, if stack temperature Ts is above 680°C (step S3; Yes), the control unit 110 determines whether stack temperature Ts is greater than 700°C) (step S4).
If stack temperature Ts is not above 700°C (step S4; No), stack temperature Ts is above 680°C and equal to or less than 700°C, and the deviation from the appropriate temperature range A (the temperature gap from the appropriate temperature range A; in this case the temperature difference relative to the upper limit temperature T₂) is small, so the control unit 110 sets the speed of increase in supply flow rate AF to a minimum value ΔAFₘᵢₙ (step S8) and terminates processing. The supply flow rate AF is thus increased at the minimum value ΔAFₘᵢₙ (rate of increase per unit time), so that cooling performance relative to the fuel cell stack 14 is increased.

0078 In this case, however, the temperature deviation is small, so if the speed of increase in the supply flow rate AF is too large and the amount of generating air supplied compared to the speed of increase in stack temperature Ts is too large, there is a risk that stack temperature Ts will be too low, and fluctuation in the stack temperature Ts will become unstable, etc. Therefore in the present embodiment if the temperature difference is small, the speed of increase in the supply flow rate AF is suppressed and the above-described problem does not occur.

0079 On the other hand, if stack temperature Ts is above 700°C (step S4; Yes), the control unit 110 determines whether stack temperature Ts is greater than 710°C (step 5).
If stack temperature Ts is not above 700°C (step S5; No), stack temperature Ts is above 700°C but at or below 710°C, with a medium deviation from the appropriate temperature range A, therefore the control unit 110 sets the speed of increase in the supply flow rate AF at a mid-value ΔAF_{mid} which is larger than the minimum value ΔAFₘᵢₙ (step S7) and terminates processing.

0080 In this case when stack temperature Ts exceeds 700°C, the temperature deviation is mid-level, so the control unit 110 increases the speed of increase in cooling performance by increasing the speed of increase in the supply flow rate AF more, so as to bring stack temperature Ts quickly into the appropriate temperature range A.

0081 On the other hand if stack temperature Ts is above 710°C (step S5; Yes), deviation from the appropriate temperature range A is large, so the control unit 110 sets the speed of increase in the supply flow rate AF at the maximum value ΔAFₘₐₓ (step S6), which is larger than the mid-value ΔAF_{mid}, and terminates processing.

0082 In this case when stack temperature Ts exceeds 710°C, the temperature deviation is large, so the control unit 110 quickly increases the speed of increase in cooling performance by further increasing the speed of increase in the supply flow rate AF more so as to bring stack temperature Ts quickly into the appropriate temperature range A.

0083 Thus in the present embodiment stack temperature Ts can be returned quickly to the appropriate temperature range A in response to temporary rises in stack temperature Ts by setting the speed of increase in the supply flow rate AF to be faster in proportion to the temperature deviation of stack temperature Ts relative to the appropriate temperature range A.
However, even if the temperature deviation is large, the supply flow rate AF is limited to the maximum supply flow rate AFₘₐₓ (see step S2), therefore the amount of generating air supplied can be prevented from becoming excessive. Also, even if the temperature deviation is large, the supply flow rate AF is limited to the maximum supply flow rate AFₘₐₓ, therefore the higher the temperature deviation, the higher is the temperature at which stack temperature Ts is held, so the degradation compensation amount for maintaining power output performance can be increased.
In this embodiment it is also conceivable that degradation could advance further with the supply flow rate AF having reached the maximum supply flow rate AFₘₐₓ, so that stack temperature Ts rises too far. When the stack temperature exceeds 820°C the system is stopped for safety reasons, therefore no safety problems arise due to the supply flow rate AF not exceeding the maximum supply flow rate.

### Explanation of Reference Numerals

0084
1: Solid oxide fuel cell device (fuel cell device)
2: Fuel cell module
4: Auxiliary unit
10: Electrical generating chamber
12: Fuel cell assembly
14: Fuel cell stack
16: Fuel cell unit
18: Combustion chamber
20: Reformer
22: Air heat exchanger
28: Water flow rate regulator unit
38: Fuel flow rate regulator unit (fuel gas supply means)
44: Reforming air flow rate regulator unit
45: Generating air flow rate regulator unit (oxygen-containing gas supply means)
54: Inverter
83: Ignition device
84: Fuel cells
110: Control unit (control device)
142: Generating chamber temperature sensor (temperature detection means)

## Claims

1. A fuel cell device comprising a fuel cell stack for generating power by reacting fuel gas and oxygen-containing gas; a fuel gas supply means for supplying fuel gas to the fuel cell stack; an oxygen-containing gas supply means for supplying oxygen-containing gas to the fuel cell stack; a temperature detection means for detecting the temperature of the fuel cell stack; and a control device for controlling a supply flow rate of oxygen-containing gas, wherein the control device controls the supply flow rate of oxygen-containing gas so that the cell stack is within an appropriate temperature range;
wherein the control device is constituted to determine degradation of the fuel cell stack, and to execute control to increase the supply flow rate of oxygen-containing gas so as to return the stack temperature to the appropriate temperature range when the fuel cell stack is not in a degraded state, and to execute control of the supply flow rate of oxygen-containing gas so as not to increase the supply flow rate of oxygen-containing gas until reaching the supply flow rate required to return the cell stack temperature to the appropriate temperature range when the fuel cell stack is in a degraded state.

2. The fuel cell device of Claim 1, wherein the control device makes a determination that the fuel cell has degraded if the cell stack temperature continues to be outside the appropriate temperature range for a predetermined time period, and when fuel cell degradation is determined, the control device suppresses increases in the supply flow rate of oxygen-containing gas.

3. The fuel cell device of Claim 2, wherein an upper limit value is set for the supply flow rate of oxygen-containing gas, and the control device does not permit increases after the supply flow rate of oxygen-containing gas reaches the upper limit value.

4. The fuel cell device of Claim 3, wherein the upper limit value for the supply flow rate of oxygen-containing gas is fixed, regardless of the size of the deviation of the cell stack temperature from the appropriate temperature range.

5. The fuel cell device of Claim 4, wherein the speed of increase in the supply flow rate of oxygen-containing gas is set to increase in proportion to the size of the deviation of cell stack temperature from the appropriate temperature range.

6. The fuel cell device of Claim 1, wherein if the cell stack temperature is equal to or greater than a predetermined temperature, and is within the appropriate temperature range, the supply flow rate of oxygen-containing gas is not changed.
